# EUROPÄISCHE PATENTANMELDUNG

(11) **EP 3 508 752 A1**
(43) Veröffentlichungstag der Anmeldung: **10.07.2019**
(21) Anmeldenummer: 18213549.1
(22) Anmeldetag: 18.12.2018
(51) Int. Cl.: F16H 1/28, F16H 49/00

(54) **PLANETENGETRIEBE**

(30) Priorität: 03.01.2018 DE 102018200056
(71) Anmelder: Aktiebolaget SKF, 41 550 Göteborg (SE)
(72) Erfinder: Gläntz, Wolfgang, 97422 Schweinfurt (DE); Haar, Tilmann, 97437 Haßfurt (DE); Reck, Daniel, 97074 Würzburg (DE); Schulz, Ingo, 97447 Gerolzhofen (DE)
(74) Vertreter: Kohl, Thomas

(57) **Zusammenfassung**

Offenbart wird ein Planetengetriebe (1) mit einem ersten und einem zweiten Hohlrad (2, 4), und einem ersten Doppelplaneten (6), der ein erstes und ein zweites Zahnrad (8, 10) aufweist, die um eine gemeinsame Welle rotierbar angeordnet sind, wobei die Verzahnung des ersten Zahnrads (8) des ersten Doppelplaneten (6) in die Verzahnung des ersten Hohlrads (2) eingreift und wobei die Verzahnung des zweiten Zahnrads (10) des ersten Doppelplaneten (6) in die Verzahnung des zweiten Hohlrads (4) eingreift. Das erste Zahnrad (8) des ersten Doppelplaneten (6) ist im Uhrzeigersinn derart vorgespannt ist, dass die Verzahnung des ersten Zahnrads (8) des ersten Doppelplaneten (6) in Kontakt mit der Verzahnung des ersten Hohlrads (2) ist. Das zweite Zahnrad (10) des ersten Doppelplaneten (6) ist gegen den Uhrzeigersinn derart vorgespannt ist, dass die Verzahnung des zweiten Zahnrads (10) des ersten Doppelplaneten (6) in Kontakt mit der Verzahnung des zweiten Hohlrads (4) ist.

## Beschreibung

Vorliegende Erfindung betrifft ein Planetengetriebe mit einem ersten und zweiten Hohlrad und einem ersten Doppelplaneten gemäß dem Oberbegriff von Patentanspruch 1.

Planetengetriebe weisen üblicherweise mehrere Zahnräder auf. Wenn die Verzahnungen der Zahnräder eines solchen Planetengetriebes ineinandergreifen, besteht häufig ein Spiel zwischen den Verzahnungen. Für Zahnräder, die nur in einer Rotationsrichtung laufen, hat dies keinen weiteren Einfluss, da die Verzahnungen von zwei ineinandergreifenden Zahnrädern bei Inbetriebnahme einmal aneinander anschlagen und sich dann mit diesem Anschlag drehen. Ein weiteres Anschlagen tritt im weiteren Betrieb nicht auf.

Wenn die Zahnräder jedoch ihre Rotationsrichtung ändern, zum Beispiel sowohl eine Vorwärts- als auch eine Rückwärtsbewegung durchführen, verursacht das Spiel zwischen den Zahnrädern, dass deren Verzahnungen, unter Umständen ungleich, aneinanderstoßen. Dies kann zu einer ungewünschten Abnutzung der Zahnräder führen.

Es ist deshalb Aufgabe vorliegender Erfindung, ein Spiel zwischen der Verzahnung von Zahnrädern in einem Planetengetriebe zu verringern.

Diese Aufgabe wird durch ein Planetengetriebe gemäß Patentanspruch 1 gelöst.

Ein solches Planetengetriebe weist ein erstes und ein zweites Hohlrad sowie einen ersten Doppelplaneten auf. Der erste Doppelplanet weist ein erstes und ein zweites Zahnrad auf, die um eine gemeinsame Welle rotierbar angeordnet sind, wobei die Verzahnung des ersten Zahnrads des ersten Doppelplaneten in die Verzahnung des ersten Hohlrads eingreift und wobei die Verzahnung des zweiten Zahnrads des ersten Doppelplaneten in die Verzahnung des zweiten Hohlrads eingreift.

Um ein Spiel zwischen der Verzahnung der Zahnräder des ersten Doppelplaneten sowie den Hohlrädern zu minimieren, wird das erste Zahnrad des ersten Doppelplaneten im Uhrzeigersinn derart vorgespannt, dass die Verzahnung des ersten Zahnrads des ersten Doppelplaneten in Kontakt mit der Verzahnung des ersten Hohlrads ist. Zusätzlich wird das zweite Zahnrad des ersten Doppelplaneten gegen den Uhrzeigersinn derart vorgespannt, dass die Verzahnung des zweiten Zahnrads des ersten Doppelplaneten in Kontakt mit der Verzahnung des zweiten Hohlrads ist. Auf diese Weise werden die Verzahnungen der Zahnräder des ersten Doppelplaneten in zwei verschiedene Richtungen, einmal im Uhrzeigersinn, einmal gegen den Uhrzeigersinn gegen die Hohlräder (tangential) vorgespannt. Dadurch besteht aufgrund der Vorspannung bereits ein Kontakt zwischen den Verzahnungen der Hohlräder und den Verzahnungen der Zahnräder des Doppelplaneten. Zusätzlich wird dieser Kontakt durch die Vorspannung in unterschiedliche Richtungen auch im Betrieb aufrechterhalten und ein Spiel zwischen den Verzahnungen wird vermieden.

Wenn die Zahnräder des Doppelplaneten vorgespannt sind, werden diese in ihrer Position zueinander fixiert. Dies kann beispielsweise durch Verschweißen, Löten oder Kleben erfolgen. Alternativ können die beiden Zahnräder auch eine Keilverzahnung aufweisen, die die beiden Zahnräder gegeneinander sichert, wenn sie aufeinander gesteckt werden. Diese Keilverzahnung kann sowohl axial wirksam sein, d. h. die Keile sind in der Fläche der Zahnräder eingearbeitet, die senkrecht zur Drehachse der Zahnräder ist, oder auch radial, d. h. die Keile sind in der Mantelfläche der Nabe an einem Zahnrad und in der Innenbohrung des anderen Zahnrades eingearbeitet. Die Keile können auch auf einem separaten Träger, der schließlich mit den Zahnrädern verbunden wird, eingearbeitet sein. Werden die beiden Zahnräder miteinander gefügt, gleiten die gegenüberliegenden Keilflächen der beiden Zahnräder aufeinander ab und erzeugen so die Verdrehung der Zahnräder, bis diese an den Flanken der Hohlräder zur Anlage kommen und somit die Verspannung erzeugen. In diesem Zustand können die beiden Zahnräder zueinander fixiert werden. Werden die beiden gegenüberliegenden Keilflächen derart ausgeführt, dass sie sich im Bereich der Selbsthemmung befinden, kann auf eine dauerhafte Fixierung verzichtet und die beiden Zahnräder durch z. B. eine Federkraft gegeneinander gedrückt werden. Dieser Mechanismus ermöglicht eine kontinuierliche Nachstellung der axialen und damit auch radialen Position der beiden Zahnräder zueinander, was wiederum eine automatische Nachstellung der Spielfreiheit, z. B. im Falle von Verschleiß an den Zahnflanken, ermöglicht.

Der bei einem Planetengetriebe vorgesehene Antrieb, d.h. ein Element, welches durch eine Welle angetrieben wird, kann beispielsweise durch eines der Hohlräder implementiert werden, wobei das andere Hohlrad als Abtrieb wirkt. Da der erste Doppelplanet mit einem Zahnrad in Kontakt mit dem ersten Hohlrad und mit dem anderen Zahnrad in Kontakt mit dem zweiten Hohlrad ist, wird die Bewegung des als Antrieb wirkenden Hohlrads auf das als Abtrieb wirkende Hohlrad übertragen. Es sind jedoch auch andere Kombinationen möglich. Beispielsweise kann ein Planetenträger vorgesehen sein, der als Antrieb wirkt. Zusätzlich kann das Planetengetriebe auch ein Sonnenrad aufweisen.

Wenn nur ein Doppelplanet verwendet wird, kann ein Ausweichen der beiden Hohlräder gegeneinander auftreten. Um das zu vermeiden, kann das Planetengetriebe gemäß einer Ausführungsform einen zweiten Doppelplaneten aufweisen, der ein erstes und ein zweites Zahnrad aufweist, die um eine gemeinsame Welle rotierbar angeordnet sind, wobei die Verzahnung des ersten Zahnrads des zweiten Doppelplaneten in die Verzahnung des ersten Hohlrads eingreift und wobei die Verzahnung des zweiten Zahnrads des zweiten Doppelplaneten in die Verzahnung des zweiten Hohlrads eingreift.

Durch die Verwendung eines ersten und eines zweiten Doppelplaneten wird die Stabilität in dem Planetengetriebe verbessert. Durch den zweiten Doppelplaneten kann verhindert werden, dass sich der erste Doppelplanet radial in Bezug auf das erste und zweite Hohlrad verschiebt. Dies ist möglich, da der erste Doppelplanet und der zweite Doppelplanet durch einen gemeinsamen Planetenträger verbunden werden. Beispielsweise kann der Planetenträger als Antrieb wirken, durch den eine Kraft von einer Welle auf die Doppelplaneten und dadurch auf die Hohlräder übertragen wird.

Um das Spiel in dem Planetengetriebe auch für den zweiten Doppelplaneten zu reduzieren und um zu verhindern, dass sich die Hohlräder gegeneinander verdrehen, kann das erste Zahnrad des zweiten Doppelplaneten gegen den Uhrzeigersinn derart vorgespannt sein, dass die Verzahnung des ersten Zahnrads des zweiten Doppelplaneten in Kontakt mit der Verzahnung des ersten Hohlrads ist. Zusätzlich kann das zweite Zahnrad des zweiten Doppelplaneten im Uhrzeigersinn derart vorgespannt sein, dass die Verzahnung des zweiten Zahnrads des zweiten Doppelplaneten in Kontakt mit der Verzahnung des zweiten Hohlrads ist.

Das Spiel zwischen den zwei Hohlrädern und den Doppelplaneten wird durch die Verwendung von vorgespannten Doppelplaneten verhindert. Durch die Vorspannung des zweiten Doppelplaneten, die entgegengesetzt zu der Vorspannung des ersten Doppelplaneten ist, kann ein Spiel zwischen den Verzahnungen noch besser verhindert werden. Zusätzlich hält die gleichmäßige Kraftverteilung aufgrund der zwei Doppelplaneten die Hohlräder an Ort und Stelle. Insbesondere ist hierbei die Vorspannkraft für alle Zahnräder gleich.

Gemäß einer Ausführungsform weist das Planetengetriebe einen dritten Doppelplaneten auf, der ein erstes und ein zweites Zahnrad aufweist, die um eine gemeinsame Welle rotierbar angeordnet sind, wobei die Verzahnung des ersten Zahnrads des dritten Doppelplaneten in die Verzahnung des ersten Hohlrads eingreift und wobei die Verzahnung des zweiten Zahnrads des dritten Doppelplaneten in die Verzahnung des zweiten Hohlrads eingreift. Durch den dritten Doppelplaneten kann die Lastkapazität des Planetengetriebes weiter erhöht werden. Bevorzugt sind die drei Planeten in einem 120° Winkel zueinander angeordnet. Dadurch kann die Lastverteilung in dem Planetengetriebe verbessert werden.

Gemäß einer Ausführungsform ist das erste Zahnrad des dritten Doppelplaneten im Uhrzeigersinn derart vorgespannt, dass die Verzahnung des ersten Zahnrads des dritten Doppelplaneten in Kontakt mit der Verzahnung des ersten Hohlrads ist. Gleichzeitig ist das zweite Zahnrad des dritten Doppelplaneten gegen den Uhrzeigersinn derart vorgespannt, dass die Verzahnung des zweiten Zahnrads des dritten Doppelplaneten in Kontakt mit der Verzahnung des zweiten Hohlrads ist.

Durch die Vorspannung des dritten Doppelplaneten, die der Vorspannung des ersten Doppelplaneten entspricht und entgegengesetzt zu der Vorspannung des zweiten Doppelplaneten ist, wird ein Spiel der Verzahnungen in dem Planetengetriebe für den dritten Doppelplaneten reduziert.

Gemäß einer Ausführungsform weist das Planetengetriebe einen vierten Doppelplaneten auf. Der vierte Doppelplanet weist ebenfalls ein erstes und ein zweites Zahnrad auf, die um eine gemeinsame Welle rotierbar angeordnet sind, wobei die Verzahnung des ersten Zahnrads des vierten Doppelplaneten in die Verzahnung des ersten Hohlrads eingreift und wobei die Verzahnung des zweiten Zahnrads des vierten Doppelplaneten in die Verzahnung des zweiten Hohlrads eingreift. Dabei ist das erste Zahnrad des vierten Doppelplaneten gegen den Uhrzeigersinn derart vorgespannt, dass die Verzahnung des ersten Zahnrads des vierten Doppelplaneten in Kontakt mit der Verzahnung des ersten Hohlrads ist. Zusätzlich ist das zweite Zahnrad des vierten Doppelplaneten im Uhrzeigersinn derart vorgespannt, dass die Verzahnung des zweiten Zahnrads des vierten Doppelplaneten in Kontakt mit der Verzahnung des zweiten Hohlrads ist.

Durch Verwendung von vier Doppelplaneten kann das Spiel zwischen den zwei Hohlrädern und den Doppelplaneten sowie ein Verdrehen der Hohlräder zueinander in alle Rotationsrichtungen, das heißt vorwärts und rückwärts, verhindert werden. Durch die Vorspannung des vierten Doppelplaneten, die der Vorspannung des zweiten Doppelplaneten entspricht, wird das Spiel zwischen den Verzahnungen der Zahnräder des vierten Doppelplaneten und den Verzahnungen der Hohlräder reduziert. Des Weiteren kann durch die Verwendung eines vierten Doppelplaneten die Lastkapazität erhöht werden.

Um die Last in dem Planetengetriebe auszubalancieren, sind die vier Doppelplaneten bevorzugt um jeweils 90° versetzt angeordnet. Dabei sind der erste und der zweite Doppelplanet um 90° zueinander versetzt angeordnet. Der dritte und der vierte Doppelplanet sind ebenfalls um 90° zueinander versetzt angeordnet. Der erste und dritte Doppelplanet und der zweite und vierte Doppelplanet sind jeweils um 180° versetzt angeordnet. Auf diese Weise wird die unterschiedliche Vorspannung umlaufend gleichmäßig verteilt.

Gemäß einer weiteren Ausführungsform ist zumindest einer der Doppelplaneten nach radial außen vorgespannt. Das bedeutet, dass zumindest einer der Doppelplaneten in Richtung der Hohlräder gedrückt wird, d.h. nach radial außen vorgespannt wird. Auf diese Weise hat die Verzahnung von zumindest einem der Doppelplaneten Kontakt mit der Verzahnung der Hohlräder nicht nur an einer Seite der Verzahnung, sondern an beiden Seiten der Verzahnung. Dies ist insbesondere bei der Verwendung von drei Doppelplaneten bevorzugt. Dabei kann einer der Doppelplaneten ohne Vorspannung durch ein Verdrehen der Zahnräder, sondern lediglich mit einer Vorspannung nach radial außen vorgesehen sein.

Um die Vorspannung nach radial außen zu ermöglichen, kann in dem Planetenträger mindestens eine Feder angeordnet sein, um den zumindest einen Doppelplaneten in Richtung der Hohlräder vorzuspannen.

Die Feder kann dabei eine Kraft auf den zumindest einen Doppelplaneten ausüben, die ausreicht, um den Doppelplaneten in Richtung der Hohlräder zu drücken.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine Schnittansicht einer ersten Ausführungsform eines Planetengetriebes;
- Fig. 2:: eine Schnittansicht einer zweiten Ausführungsform eines Planetengetriebes;
- Fig. 3:: eine Schnittansicht einer dritten Ausführungsform eines Planetengetriebes;
- Fig. 4:: eine Explosionsansicht eines Doppelplaneten.

Im Folgenden werden gleiche oder funktionell gleichwirkende Elemente mit denselben Bezugszeichen gekennzeichnet.

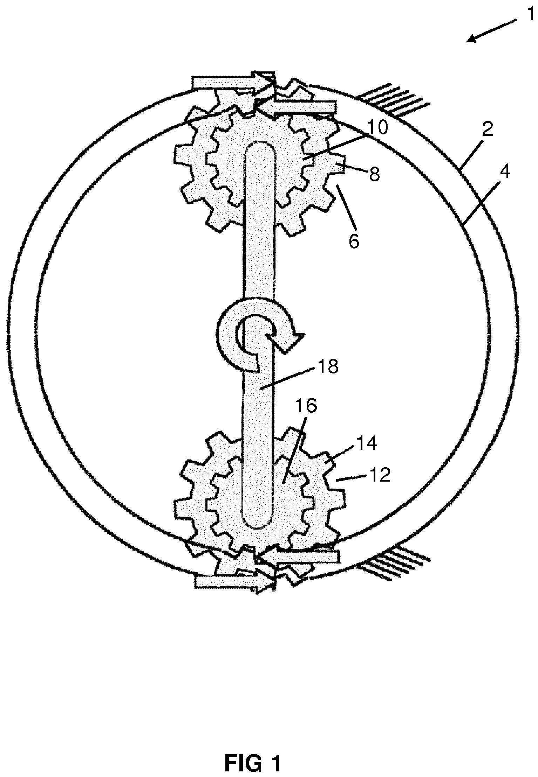

Fig. 1 zeigt ein Planetengetriebe 1, welches ein erstes Hohlrad 2 und ein zweites Hohlrad 4 aufweist. Des Weiteren weist das Planetengetriebe 1 einen ersten Doppelplaneten 6 sowie einen zweiten Doppelplaneten 12 auf. Die beiden Doppelplaneten 6, 12 werden durch einen Planetenträger 18 verbunden, der zwischen diesen angeordnet ist. Alternativ kann das Planetengetriebe 1 auch nur einen Doppelplaneten 6 aufweisen. Des Weiteren kann ein Sonnenrad (nicht gezeigt) verwendet werden.

In der in Fig. 1 gezeigten Ausführungsform ist das erste Hohlrad 2 größer als das zweite Hohlrad 4. Des Weiteren ist das erste Hohlrad 2 fest, wobei der Planetenträger 18 als Antrieb, der in Pfeilrichtung rotiert, und das zweite Hohlrad 4 als Abtrieb wirken. Andere Ausgestaltungen sowie Größenverhältnisse der Hohlräder 2, 4 und Doppelplaneten 6, 12 sind ebenfalls möglich.

Die beiden Doppelplaneten 6, 12 weisen jeweils zwei Zahnräder 8, 10 und 14, 16 auf. Die ersten Zahnräder 8, 14 sind dabei in Kontakt mit dem ersten Hohlrad 2 und die zweiten Zahnräder 10, 16 sind in Kontakt mit dem zweiten Hohlrad 4.

Um ein Spiel zwischen den Verzahnungen der Zahnräder 8, 10, 14, 16 sowie der Hohlräder 2, 4 zu verhindern, werden die Zahnräder 8, 10, 14, 16 des ersten und zweiten Doppelplaneten 6, 12 vorgespannt. Hierzu wird das erste Zahnrad 8 des ersten Doppelplaneten 6 im Uhrzeigersinn gegen die Verzahnung des ersten Hohlrads 2 vorgespannt, wie es durch den Pfeil angedeutet ist. Das zweite Zahnrad 10 des ersten Doppelplaneten 6 wird gegen den Uhrzeigersinn gegen die Verzahnung des zweiten Hohlrads 4 vorgespannt, wie ebenfalls durch einen Pfeil angedeutet ist.

Spiegelverkehrt wird das erste Zahnrad 14 des zweiten Doppelplaneten 12 gegen den Uhrzeigersinn gegen die Verzahnung des ersten Hohlrads 2 vorgespannt, wie es durch den Pfeil angedeutet ist. Gleichzeitig wird das zweite Zahnrad 16 des zweiten Doppelplaneten 12 im Uhrzeigersinn gegen die Verzahnung des zweiten Hohlrads 4 vorgespannt, wie es durch den Pfeil angedeutet ist. Auf diese Weise kann ein Spiel zwischen den Zahnrädern 8, 10, 14, 16 verhindert werden, welches sich im Betrieb schädlich auf das Planetengetriebe 1 auswirken würde.

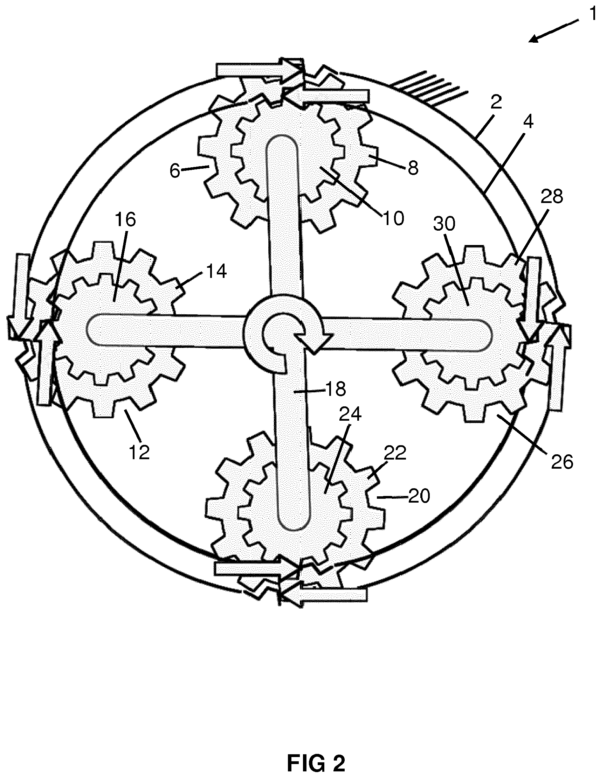

Fig. 2 weist zusätzlich zu dem ersten und zweiten Doppelplaneten 6, 12 einen dritten und einen vierten Doppelplaneten 20, 26 auf. Die vier Doppelplaneten 6, 12, 20, 26 werden durch den Planetenträger 18 verbunden. Um nun ein Spiel zwischen den Verzahnungen der Doppelplaneten sowie der Hohlräder zu verhindern, sind alle Doppelplaneten 6, 12, 20, 26 vorgespannt.

Der erste und zweite Doppelplanet 6, 12 sind dabei in einem 90° Winkel zueinander angeordnet. Spiegelverkehrt dazu sind der dritte und vierte Doppelplanet 20, 26 angeordnet. Der dritte Doppelplanet weist ebenfalls ein erstes und zweites Zahnrad 22, 24 auf, wobei das erste Zahnrad 22 in Kontakt mit der Verzahnung des ersten Hohlrads 2 ist und das zweite Zahnrad 24 in Kontakt mit der Verzahnung des zweiten Hohlrads 4 ist. Das erste Zahnrad 22 ist dabei im Uhrzeigersinn gegen die Verzahnung des ersten Hohlrads 2 vorgespannt, und das zweite Zahnrad 24 ist gegen den Uhrzeigersinn gegen die Verzahnung des zweiten Hohlrads 4 vorgespannt. Spiegelverkehrt dazu sind ein erstes und zweites Zahnrad 28, 30 des vierten Doppelplaneten 26 vorgespannt. Das bedeutet, dass das erste Zahnrad 28 gegen den Uhrzeigersinn gegen die Verzahnung des ersten Hohlrads 2 vorgespannt ist, und das zweite Zahnrad 30 im Uhrzeigersinn gegen die Verzahnung des zweiten Hohlrads 4 vorgespannt ist.

Durch die Verwendung von vier Doppelplaneten 6, 12, 20, 26 kann zum einen die Lastkapazität des gesamten Planetengetriebes 1 erhöht werden, gleichzeitig wird durch die Vorspannung der vier Doppelplaneten 6, 12, 20, 26 in alternierender Form um den Umfang der Hohlräder 2, 4 gesehen ein Spiel zwischen den Verzahnungen reduziert.

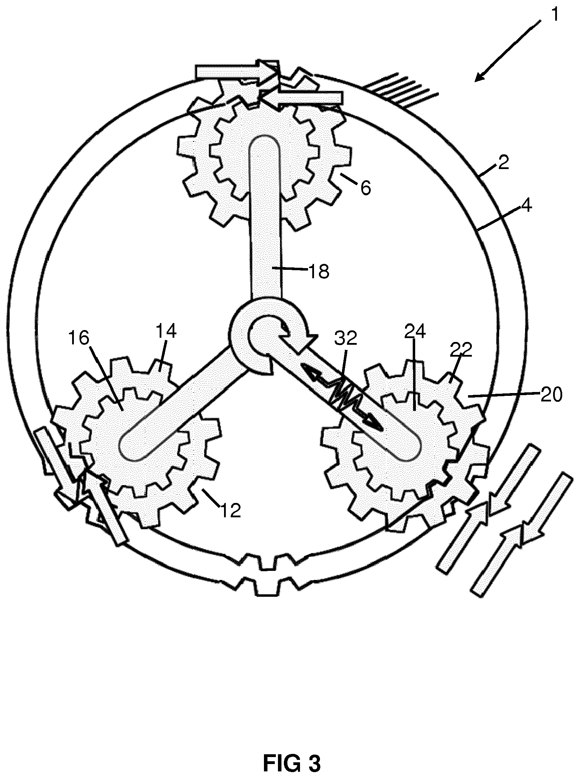

Alternativ können auch nur drei Doppelplaneten 6, 12, 20 vorgesehen sein. Dies ist in Fig. 3 dargestellt. Die drei Doppelplaneten 6, 12, 20 sind dabei in einem 120° Winkel zueinander angeordnet. Der dritte Doppelplanet 20 kann dabei in seiner Vorspannung der Zahnräder 22, 24 entweder der Vorspannung des ersten Doppelplaneten 6 oder des zweiten Doppelplaneten 12 entsprechen.

Zusätzlich kann in dem Planetenträger 18 eine Feder 32 vorgesehen sein, die den dritten Doppelplaneten 20 gegen die Verzahnung des ersten und zweiten Hohlrads 2, 4 drückt. Auf diese Weise sind die Verzahnungen des ersten und zweiten Zahnrads 22, 24 des dritten Doppelplaneten 20 nicht nur auf einer Seite der Zähne, sondern auf beiden, in Kontakt mit der Verzahnung des ersten und zweiten Hohlrads 2, 4. Auf diese Weise kann auch bei einer Verwendung von drei Doppelplaneten ein Spiel optimal reduziert werden.

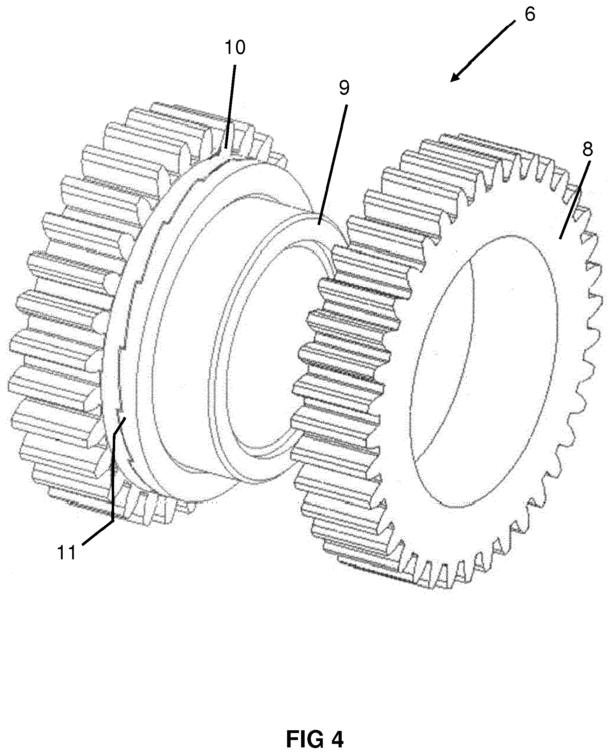

Fig. 4 zeigt beispielhaft, wie die zwei Zahnräder 8, 10 eines Doppelplaneten 6 aneinander befestigt werden können. Hierzu weist das Zahnrad 10 eine Nabe 9 auf, die in das Zahnrad 8 eingeführt werden kann, um diese aufeinander zu stecken. Um die zwei Zahnräder 8, 10 aneinander zu sichern, ist eine Keilverzahnung 11 vorgesehen, die axial wirksam ist. d. h. die Keile sind in der Fläche der Zahnräder 8, 10 eingearbeitet, die senkrecht zur Drehachse der Zahnräder 8, 10 ist. Alternativ können die Keile auch radial wirksam sein und in der Mantelfläche der Nabe an einem Zahnrad und in der Innenbohrung des anderen Zahnrades eingearbeitet sein.

Werden die beiden Zahnräder 8, 10 miteinander gefügt, gleiten die gegenüberliegenden Keilflächen 11 der beiden Zahnräder 8, 10 aufeinander ab und erzeugen so die Verdrehung der Zahnräder 8, 10, bis diese an den Flanken der Hohlräder 2, 4 zur Anlage kommen und somit die Vorspannung erzeugen. In diesem Zustand können die beiden Zahnräder zueinander fixiert werden, beispielsweise durch Verkleben oder Verschweißen. Werden die beiden gegenüberliegenden Keilflächen 11 derart ausgeführt, dass sie sich im Bereich der Selbsthemmung befinden, kann auf eine dauerhafte Fixierung verzichtet und die beiden Zahnräder 8, 10 beispielsweise durch eine Federkraft gegeneinander gedrückt werden.

Durch die Vorspannung der Zahnräder der einzelnen Doppelplaneten kann ein Spiel zwischen der Verzahnung der Zahnräder der Doppelplaneten sowie der Hohlräder minimiert werden.

### Bezugszeichenliste

- 1: Planetengetriebe
- 2: erstes Hohlrad
- 4: zweites Hohlrad
- 6: erster Doppelplanet
- 8: erstes Zahnrad
- 9: Nabe
- 10: zweites Zahnrad
- 11: Keilverzahnung
- 12: zweiter Doppelplanet
- 14: erstes Zahnrad
- 16: zweites Zahnrad
- 18: Planetenträger
- 20: dritter Doppelplanet
- 22: erstes Zahnrad
- 24: zweites Zahnrad
- 26: vierter Doppelplanet
- 28: erstes Zahnrad
- 30: zweites Zahnrad
- 32: Feder

## Patentansprüche

1. Planetengetriebe (1) mit
einem ersten und einem zweiten Hohlrad (2, 4), und
einem ersten Doppelplaneten (6), der ein erstes und ein zweites Zahnrad (8, 10) aufweist, die um eine gemeinsame Welle rotierbar angeordnet sind, wobei die Verzahnung des ersten Zahnrads (8) des ersten Doppelplaneten (6) in die Verzahnung des ersten Hohlrads (6) eingreift und wobei die Verzahnung des zweiten Zahnrads (10) des ersten Doppelplaneten (6) in die Verzahnung des zweiten Hohlrads (4) eingreift, **dadurch gekennzeichnet, dass**
das erste Zahnrad (8) des ersten Doppelplaneten (6) im Uhrzeigersinn derart vorgespannt ist, dass die Verzahnung des ersten Zahnrads (8) des ersten Doppelplaneten (6) in Kontakt mit der Verzahnung des ersten Hohlrads (2) ist, und dass das zweite Zahnrad (10) des ersten Doppelplaneten (6) gegen den Uhrzeigersinn derart vorgespannt ist, dass die Verzahnung des zweiten Zahnrads (10) des ersten Doppelplaneten (6) in Kontakt mit der Verzahnung des zweiten Hohlrads (4) ist.

2. Planetengetriebe (1) nach Anspruch 1, mit einem zweiten Doppelplaneten (12), der ein erstes und ein zweites Zahnrad (14, 16) aufweist, die um eine gemeinsame Welle rotierbar angeordnet sind, wobei die Verzahnung des ersten Zahnrads (14) des zweiten Doppelplaneten (12) in die Verzahnung des ersten Hohlrads (2) eingreift und wobei die Verzahnung des zweiten Zahnrads (16) des zweiten Doppelplaneten (12) in die Verzahnung des zweiten Hohlrads (4) eingreift.

3. Planetengetriebe (1) nach Anspruch 2, wobei der erste Doppelplanet (6) und der zweite Doppelplanet (12) durch einen gemeinsamen Planetenträger (18) angetrieben werden.

4. Planetengetriebe (1) nach Anspruch 2 oder 3, wobei das erste Zahnrad (14) des zweiten Doppelplaneten (12) gegen den Uhrzeigersinn derart vorgespannt ist, dass die Verzahnung des ersten Zahnrads (14) des zweiten Doppelplaneten (12) in Kontakt mit der Verzahnung des ersten Hohlrads (2) ist, und dass das zweite Zahnrad (16) des zweiten Doppelplaneten (12) im Uhrzeigersinn derart vorgespannt ist, dass die Verzahnung des zweiten Zahnrads (16) des zweiten Doppelplaneten (12) in Kontakt mit der Verzahnung des zweiten Hohlrads (4) ist.

5. Planetengetriebe (1) nach einem der vorhergehenden Ansprüche, mit einem dritten Doppelplaneten (20), der ein erstes und ein zweites Zahnrad (22, 24) aufweist, die um eine gemeinsame Welle rotierbar angeordnet sind, wobei die Verzahnung des ersten Zahnrads (22) des dritten Doppelplaneten (20) in die Verzahnung des ersten Hohlrads (2) eingreift und wobei die Verzahnung des zweiten Zahnrads (24) des dritten Doppelplaneten (20) in die Verzahnung des zweiten Hohlrads (4) eingreift.

6. Planetengetriebe (1) nach Anspruch 5, wobei das erste Zahnrad (22) des dritten Doppelplaneten (20) im Uhrzeigersinn derart vorgespannt ist, dass die Verzahnung des ersten Zahnrads (22) des dritten Doppelplaneten (20) in Kontakt mit der Verzahnung des ersten Hohlrads (2) ist, und dass das zweite Zahnrad (24) des dritten Doppelplaneten (20) gegen den Uhrzeigersinn derart vorgespannt ist, dass die Verzahnung des zweiten Zahnrads (24) des dritten Doppelplaneten (20) in Kontakt mit der Verzahnung des zweiten Hohlrads (4) ist.

7. Planetengetriebe (1) nach einem der Ansprüche 5 oder 6, mit einem vierten Doppelplaneten (26), der ein erstes und ein zweites Zahnrad (28, 30) aufweist, die um eine gemeinsame Welle rotierbar angeordnet sind, wobei die Verzahnung des ersten Zahnrads (28) des vierten Doppelplaneten (26) in die Verzahnung des ersten Hohlrads (2) eingreift und wobei die Verzahnung des zweiten (30) Zahnrads des vierten Doppelplaneten (26) in die Verzahnung des zweiten Hohlrads (4) eingreift, wobei das erste Zahnrad (28) des vierten Doppelplaneten (26) gegen den Uhrzeigersinn derart vorgespannt ist, dass die Verzahnung des ersten Zahnrads (28) des vierten Doppelplaneten (26) in Kontakt mit der Verzahnung des ersten Hohlrads (2) ist, und dass das zweite Zahnrad (30) des vierten Doppelplaneten (26) im Uhrzeigersinn derart vorgespannt ist, dass die Verzahnung des zweiten Zahnrads (30) des vierten Doppelplaneten (26) in Kontakt mit der Verzahnung des zweiten Hohlrads (4) ist.

8. Planetengetriebe (1) nach Anspruch 7, wobei der erste und der dritte Doppelplanet (6, 20) um 180° versetzt angeordnet sind, wobei der zweite und der vierte Doppelplanet (12, 26) um 180° versetzt angeordnet sind, wobei der erste und der zweite Doppelplanet (6, 12) um 90° versetzt angeordnet sind und wobei der dritte und der vierte Doppelplanet (20, 26) um 90° versetzt angeordnet sind.

9. Planetengetriebe (1) nach einem der vorhergehenden Ansprüche, wobei zumindest einer der Doppelplaneten (6, 12, 20, 26) nach radial außen vorgespannt ist.

10. Planetengetriebe (1) nach Anspruch 9, wobei zumindest eine Feder (32) in dem Planetenträger (18) angeordnet ist, um den zumindest einen Doppelplaneten (6, 12, 20, 26) nach radial außen vorzuspannen.
